# EUROPÄISCHE PATENTSCHRIFT

(11) **EP 2 364 877 B1**
(45) Veröffentlichungstag und Bekanntmachung des Hinweises auf die Patenterteilung: **01.10.2014**
(21) Anmeldenummer: 11157282.2
(22) Anmeldetag: 08.03.2011
(51) Int. Cl.: B60P 1/28

(54) **Kippzustandsüberwachung**
Tip state monitoring
Surveillance d'un état de basculement

(30) Priorität: 09.03.2010 DE 102010002701
(43) Veröffentlichungstag der Anmeldung: 14.09.2011
(73) Patentinhaber: Franz Xaver Meiller Fahrzeug- und Maschinenfabrik-GmbH & Co KG, 80997 München (DE)
(72) Erfinder: Meißner, Uwe, 85560 Ebersberg (DE)
(74) Vertreter: Tiesmeyer, Johannes

(56) Entgegenhaltungen:
- EP-A2- 2 172 364
- WO-A1-2009/008785
- WO-A1-2010/092873
- FR-A1- 2 883 534
- JP-A- 2006 347 502
- US-A1- 2010 026 079

## Beschreibung

Die vorliegende Erfindung betrifft ein Verfahren nach dem Oberbegriff des Anspruchs 1.

Bei Kippvorgängen zum Entladen von auf der Kippmulde bzw. der Kippbrücke aufgenommenem Ladegut überwacht normalerweise eine Bedienperson das korrekte Abrutschen des Ladeguts, beispielsweise Schüttguts. Dabei sollte insbesondere darauf geachtet werden, dass das Ladegut nicht in der Kippmulde hängen bleibt, so dass sich eine nachteilige Lastverteilung ergibt, die zu ungünstigen Kräfteverhältnissen führt, was im Extremfall zu einem Kippen des Kipperfahrzeugs um seine Hinterachse führen könnte.

Zur Überwachung des Kippwinkels einer Kippmulde bzw. Kippbrücke ist es bekannt, Sensoren bereitzustellen, welche den ausgefahrenen Weg des Teleskopzylinders erfassen, also die Länge des ausgefahrenen Teleskopzylinders bzw. einen Abstand zwischen verschwenkter Kippbrücke und einem Referenzpunkt am Kippbrückenrahmen erfassen.

Diese Sensoren sind zusätzliche Bauteile, die gesondert angesteuert werden müssen und lediglich Auskunft über den aktuellen Kippwinkel der Kippbrücke geben, ohne dass hierbei ein Belastungszustand des zugehörigen Kippwinkels überwacht werden kann.

Ein Beispiel einer derartigen Kippwinkelüberwachung ist in der JP 2006 347502 A offenbart.

Zu Kippfahrzeugen im Allgemeinen wird auf die EP 2 172 364 A2 verwiesen.

Aufgabe der Erfindung ist es, eine Kippzustandsüberwachung bereitzustellen, bei welcher in einfacher Weise sowohl der Kippwinkel bzw. Kippwinkelbereiche als auch Rückschlüsse auf die Lastverteilung erfasst werden können.

Hierzu wird erfindungsgemäß vorgeschlagen, dass bei einem gattungsgemäßen Verfahren das Bestimmen des aktuellen Kippwinkelbereichs oder des aktuellen Kippwinkels auf Grundlage des im Teleskopzylinders herrschenden Drucks erfolgt.

Die Bestimmung eines aktuellen Kippwinkels bzw. eines IGppwinkelbereichs, in welchem sich die Kippmulde bzw. -brücke während des Kippvorgangs befindet, erfolgt also auf Grundlage des im Teleskopzylinder herrschenden Hydraulikdrucks. Vorzugsweise ist dies der einzige zu erfassende Wert für die Bestimmung des Kippwinkels. Dabei kann die bei Teleskopzylindern typische stufenweise Druckerhöhung berücksichtigt werden, welche ein Indiz dafür ist, in welchem Kippwinkelbereich die Kippmulde aktuell verschwenkt ist. So ist es beispielsweise bekannt, dass eine erste Stufe eines Teleskopzylinders den Kippwinkelbereich von 0° bis etwa 8°, eine zweite Teleskopzylinderstufe den Bereich von 8° bis etwa 17° etc. für weitere Teleskopzylinderstufen abdeckt, wobei für jede Teleskopzylinderstufe aufgrund der abnehmenden wirksamen Kolbenfläche der aufzubringende Druck zum Anheben der Kippbrücke charakteristische Werte annimmt, die auch eine Unterscheidung der Kippwinkel bzw. Kippwinkelbereiche untereinander ermöglichen. Zwischen benachbarten Teleskopzylinderstufen treten charakteristische Drucksprünge auf. Selbstverständlich sind die oben angegebenen Kippwinkelbereiche rein beispielhaft und können auch andere Werte annehmen je nach Auslegung des Teleskopzylinders.

In diesem Zusammenhang wird weiterbildend vorgeschlagen, dass beim Verfahren der erfasste Druck im Teleskopzylinder mit Druckkennwerten wenigstens einer vorbestimmten Druckkennlinie verglichen wird. Es ist dann möglich, den Hydraulikdruck in Abhängigkeit des Ergebnisses des Vergleichs zu beeinflussen.

Bevorzugt wird beim Verfahren ein weiteres Verschwenken der Kippmulde in eine Kippstellung mit größerem Kippwinkel verhindert, wenn der Vergleich ergibt, dass der erfasste Druck einen für den bestimmten Kippwinkelbereich oder/und Kippwinkel unzulässigen Wert aufweist, insbesondere größer ist als wenigstens ein Druckkennwert der für den Kippwinkelbereich oder Kippwinkel maßgeblichen Druckkennlinie. Sofern der im Teleskopzylinder für eine bestimmte Teleskopzylinderstufe wirkende Druck einen Wert annimmt, welcher außerhalb eines durch die Druckkennlinie bestimmten Normalbereichs liegt, kann daraus beispielsweise geschlossen werden, dass die aufgenommene Last (Ladegut) sich nicht entsprechend den Erwartungen von der Kippmulde löst. So kann es beispielsweise vorkommen, dass beim Transport eines großen Felsblocks die Reibungskräfte zwischen dem Felsblock und der Kippmulde sehr groß sind oder sich der Felsblock verkantet, und dass somit der Felsblock in einem bestimmten Kippwinkelbereich wider Erwarten nicht ins Rutschen kommt. Eine ähnliche Situation kann beispielsweise auch auftreten, wenn stark haftendes Schüttgut aufgeladen ist, beispielsweise lehmhaltiges und/oder feuchtes Schüttgutmaterial, wie etwa Erde, Kies oder dgl.

Weiterbildend wird vorgeschlagen, dass das Verfahren einen Schritt des wiederholten Anhebens und Absenkens der Kippmulde umfasst, derart, dass die Kippmulde einer Schüttelbewegung unterliegt. Das angesprochene Anheben und Absenken der Kippmulde erfolgt durch kurzzeitiges Erhöhen und Absenken des Drucks im Teleskopzylinder, so dass der Kippwinkel der Kippmulde um wenige Grad hin und her verändert wird. Eine derartige Schüttelbewegung kann das Lösen von anhaftendem Ladegut in vorteilhafter Weise beeinflussen, so dass das Ladegut in erwarteter Weise von der Kippmulde bzw. -brücke abrutscht.

Die Schüttelbewegung kann automatisiert durchgeführt werden, wenn der erfasste Druck den für den bestimmten Kippwinkelbereich oder/und Kippwinkel unzulässigen Wert aufweist.

Ferner wird vorgeschlagen, dass die Schüttelbewegung beendet wird, wenn der im Teleskopzylinder erfasste Druck einen für den bestimmten Kippwinkelbereich oder/und Kippwinkel zulässigen Wert aufweist, und dass anschlie-βend ein weiteres Anheben der Kippmulde, also das Verschwenken der Kippmulde in eine Kippstellung mit größerem Kippwinkel ermöglicht wird. Wie bereits erwähnt, kann durch das Durchführen einer Schüttelbewegung Ladegut in Bewegung gebracht werden, so dass sich die im Teleskopzylinder herrschenden Druckverhältnisse verändern, insbesondere zu einer Druckentlastung im Teleskopzylinder führen, so dass der im Teleskopzylinder herrschende Druck wieder auf einen durch die Druckkennlinie festgelegten Normal- oder Sollwert sinkt.

Gemäß einem zweiten Aspekt der Erfindung wird ein Kipperaufbau für ein Kipperfahrzeug mit einer am Kipperaufbau gelagerten Kippmulde vorgeschlagen, die mittels wenigstens eines hydraulischen Teleskopzylinders in wenigstens eine Richtung bezogen auf den Kipperaufbau verschwenkbar ist. Dabei umfasst der Kipperaufbau eine Hydraulikpumpe zur Versorgung des Teleskopzylinders mit Hydraulikfluid, einen dem wenigstens einen Teleskopzylinder zugeordneten Druckerfassungsensor und wenigstens eine elektronische Steuereinheit, die dafür eingerichtet ist, das oben beschriebene Verfahren zur Überwachung des Kippzustandes gemäß wenigstens einem der obigen Merkmale durchzuführen.

Der Drucksensor ist vorzugsweise als Druck-Spannungswandler ausgeführt, der an die Steuereinheit eine sich mit dem im Teleskopzylinder herrschenden Hydraulikdruck verändernde elektrische Spannung abgibt. Die Spannung kann sich dabei gemäß bekannter Charakteristiken entsprechend dem herrschenden Druck verändern, insbesondere kann sich die Spannung proportional zum herrschenden Druck verhalten.

Die Steuereinheit ist vorzugsweise derart eingerichtet, dass durch sie Druckkennwerte wenigstens einer vorbestimmten Druckkennlinie speicherbar oder gespeichert sind, vorzugsweise in Form von zur wenigstens einen Druckkennlinie zugehörigen Spannungskennwerten. In der Steuereinheit sind somit die Druckkennlinie bzw. mehrere Druckkennlinien bestimmende Sollwerte hinterlegt, mit denen ein aktuell in einem Teleskopzylinder erfasster Druck verglichen werden kann. Da vom Druck-Spannungssensor elektrische Spannungen an die Steuereinheit übertragen werden, ist es für eine einfache Berechnung vorteilhaft, wenn in der Steuereinheit der Drucklinie entsprechende Spannungskennwerte gespeichert sind, die direkt mit den vom Sensor kommenden Spannungswerten verglichen werden können.

Ferner kann die Steuereinheit derart eingerichtet sein, dass, wenn der erfasste Druck einen unzulässigen Wert annimmt, durch sie eine für eine Bedienperson wahrnehmbare Ausgabe erzeugt wird und/oder dass durch sie ein weiteres Anheben der Kippmulde automatisch verhindert wird. Die Steuereinheit kann also ein Ausgabemittel, beispielsweise eine akustische oder/ und optische Anzeige aufweisen, mittels welcher auf einen unzulässigen Druckwert im Teleskopzylinder hingewiesen werden kann. Zusätzlich oder alternativ kann die Steuereinheit auch automatisch ein weiteres Anheben der Kippmulde, also ein Verschwenken der Kippmulde in eine Kippstellung mit größerem Kippwinkel verhindern. In einem solchen Falle könnte dann die Bedienperson durch Betätigung der Steuereinheit den Kippvorgang wieder fortsetzen.

Die Steuereinheit kann ferner derart eingerichtet sein, dass durch manuelle Betätigung durch die Bedienperson oder automatisch durch die Steuereinheit selbst ein wiederholtes Anheben und Absenken der Kippmulde ansteuerbar ist, derart, dass die Kippmulde einer Schüttelbewegung unterliegt.

Die Steuereinheit ist vorzugsweise mit einem im Hydraulikkreis zwischen einer Hydraulikpumpe und dem wenigstens einen Teleskopzylinder angeordneten Ventil, vorzugsweise einem elektrisch vorgesteuerten Ventil verbunden, derart, dass durch die Steuereinheit das Ventil verstellbar ist. Das Ventil steuert/regelt den Zufluss von Hydraulikfluid von der Pumpe zum Teleskopzylinder und durch Öffnen bzw. Schließen des Ventils kann bei Förderung von Hydraulikfluid durch die Pumpe der Druck im Teleskopzylinder verändert werden. Selbstverständlich ist es auch denkbar, dass die Steuereinheit nicht nur auf das Ventil wirkt, sondern auch die Hydraulikpumpe und somit die Fördermenge von Hydraulikfluid beeinflussen kann.

Durch die Steuereinheit können auch weitere Sensorsignale erfasst und verarbeitet werden, um ggf. zusammen mit den aus den Druckwerten abgeleiteten Kippwinkelbereichen verarbeitet zu werden und ggf. Maßnahmen auszulösen. Beispielsweise könnte eine seitliche Neigung des Fahrzeugs durch einen am Fahrzeug vorgesehenen Neigungssensor erfasst werden und diese Neigung beim Verschwenken der Kippbrücke berücksichtigt werden, um ggf. mittels der Steuereinheit auf gefährliche Betriebszustände hinweisen zu können.

Ferner ist es auch denkbar, dass mittels der Steuereinheit Interpolationsalgorithmen zur Anwendung kommen, um eine Abschätzung des Druckkurvenverlaufs zwischen den Druckstufen zu ermöglichen. Insbesondere kann beispielsweise von einem Anfangsdruck einer Druckstufe deren Verlauf und der voraussichtliche Druckwert am Ende dieser Druckstufe als Schätzwert berechnet werden.

Die hier vorgestellte druckabhängige Kippwinkelüberwachung kann auch für das Absenken der Kippbrücke in einer Art Sicherheitsmodus verwendet werden. Dabei wird daran gedacht, dass das Absenken der Kippbrücke nach dem Ladevorgang insbesondere gerastet und automatisch erfolgt bis zum Übergang zwischen den Druckstufen II und I. An diesem Übergang wird das automatische Absenken gestoppt, also die Druckstufe I wird nicht eingefahren, um zu verhindern, dass eine Bedienperson oder eine sonst anwesende Person zwischen der sich absenkenden Kippbrücke und dem Kippbrückenrahmen bzw. Fahrzeugrahmen eingeklemmt wird. Das Einfahren der Teleskopstufe I muss dann manuell erfolgen. Eine derartige Sicherheitsabsenkung mittels der Überwachung des im Teleskopzylinder herrschenden Hydraulikdrucks kann auch einen selbständigen Aspekt der Anmeldung darstellen.

Um ferner Unfälle beim Bewegen des Lastkraftfahrzeugs mit gekippter Kippbrücke zu verhindern, kann auch ein Fahrsignal überwacht werden, wobei dieses Fahrsignal beispielsweise die Geschwindigkeit des Lastkraftfahrzeugs überprüft. Sofern die Geschwindigkeit einen bestimmten Wert überschreitet, beispielsweise 10 km/h, erfolgt ein automatisches vollständiges Absenken der Kippbrücke. Bei diesem automatischen vollständigen Absenken der Kippbrücke bei fahrendem Lastkraftfahrzeug kann das oben beschriebene Sicherheitsabsenken umgangen werden, da es bei einem fahrenden Lastkraftfahrzeug höchst unwahrscheinlich ist, dass sich noch eine Person im Gefahrenbereich zwischen Kippbrücke und Kippbrückenrahmen bzw. Fahrzeugrahmen befindet.

Schließlich betrifft die Erfindung gemäß einem dritten Aspekt ein Kipperfahrzeug, insbesondere Hinterkipper oder Zweiseitenkipper oder Dreiseitenkipper mit einem Fahrzeugrahmen, an dem ein Kipperaufbau mit einem der zuvor genannten Merkmale angebracht ist.

Die Erfindung wird nachfolgend unter Bezugnahme auf die anliegenden Figuren anhand einer Ausführungsform beispielhaft und nicht einschränkend beschrieben.
- Fig. 1: zeigt in stark vereinfachter schematischer Darstellung ein Kipperfahrzeug mit einer Kippmulde bzw. -brücke in einer ersten Kippstellung.
- Fig. 2: zeigt das Kipperfahrzeug der Fig. 1 in einer zweiten Kippstellung.
- Fig. 3: zeigt schematisch und vereinfacht ein hydraulisches/elektrisches Schaltbild der zur Durchführung des Verfahrens der Kippzustandsüberwachung vorgesehenen Bauteile.
- Fig. 4: zeigt ein Diagramm mit Druckkennlinien, die beim Verfahren zur Kippzustandsüberwachung verwendet werden können.

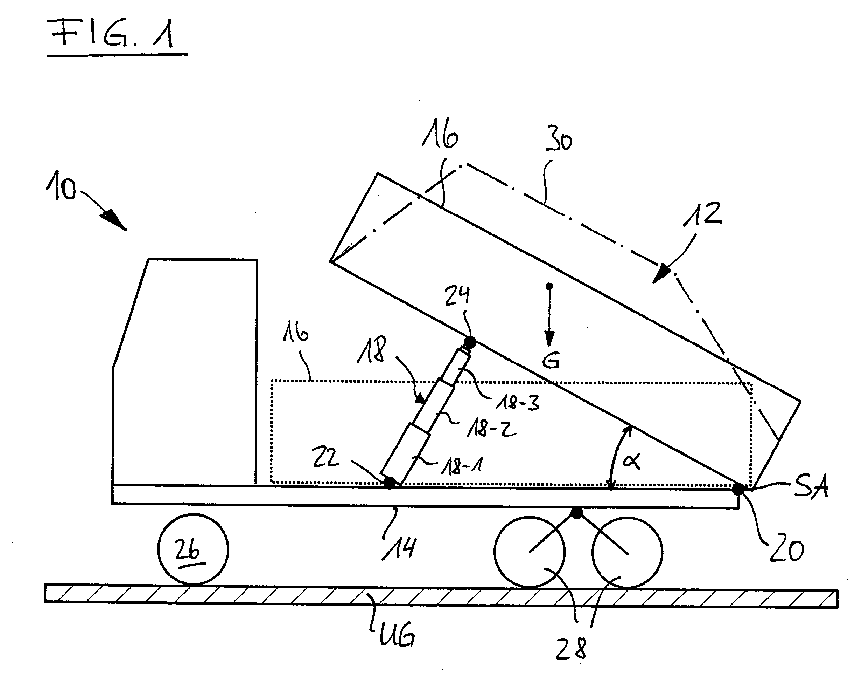

Fig. 1 zeigt stark vereinfacht und schematisch ein Kipperfahrzeug 10 mit einem Kipperaufbau 12, welcher an einem Kipperrahmen 14 abgestützt ist. Der Kipperaufbau 12 umfasst als wesentliche Hauptbestandteile eine Kippmulde bzw. Kippbrücke 16, und wenigstens einen Teleskopzylinder 18. Die Kippbrücke 16 ist in einem hinteren Bereich des Kipperrahmens 14 bei 20 schwenkbar um eine Schwenkachse SA gelagert, wobei die Schwenkachse bezogen auf die Papierebene orthogonal verläuft. Die Kippbrücke 16 ist in der Fig. 1 um den Kippwinkel α verschwenkt. Das Verschwenken erfolgt durch Ausfahren der verschiedenen Zylinderstufen 18-1 bis 18-3 des Teleskopzylinders 18. Der Teleskopzylinder 18 ist am Kipperrahmen 14 bzw. einem zugehörigen, hier nicht näher dargestellten Fahrzeugrahmen bei 22 gelenkig gelagert. Die letzte Zylinderstufe des Teleskopzylinders 18 ist bei 24 gelenkig mit der Kippbrücke 16 verbunden. Das dargestellte Kipperfahrzeug 10 steht auf einem Untergrund UG, der beispielhaft im Wesentlichen horizontal dargestellt ist. Der Kipperrahmen 14 ist in der Regel mit einem nicht dargestellten Fahrzeugrahmen (Chassis) verbunden, der mittels Vorderrädern 26 und Hinterrädern 28 auf dem Untergrund UG abgestützt ist.

In punktierter Linie ist die Kippbrücke 16 in ihrer Fahrbereitschaftsstellung dargestellt, in welcher der Teleskopzylinder 18 vollständig eingefahren ist und die Kippbrücke auch in einem vorderen Bereich des Kipperrahmens 14 auf diesem aufliegt.

In schematischer Art und Weise ist durch eine strichpunktierte Linie in der Kippmulde 16 aufgeladenes Ladegut, insbesondere Schüttgut 30 angedeutet. Durch einen Pfeil G wird rein schemtisch angedeutet, wo sich der Schwerpunkt von aufgenommenem Ladegut 30 und Kippbrücke 16 etwa befindet im dargestellten Kippzustand und wie die dort angreifende Schwerkraft wirkt.

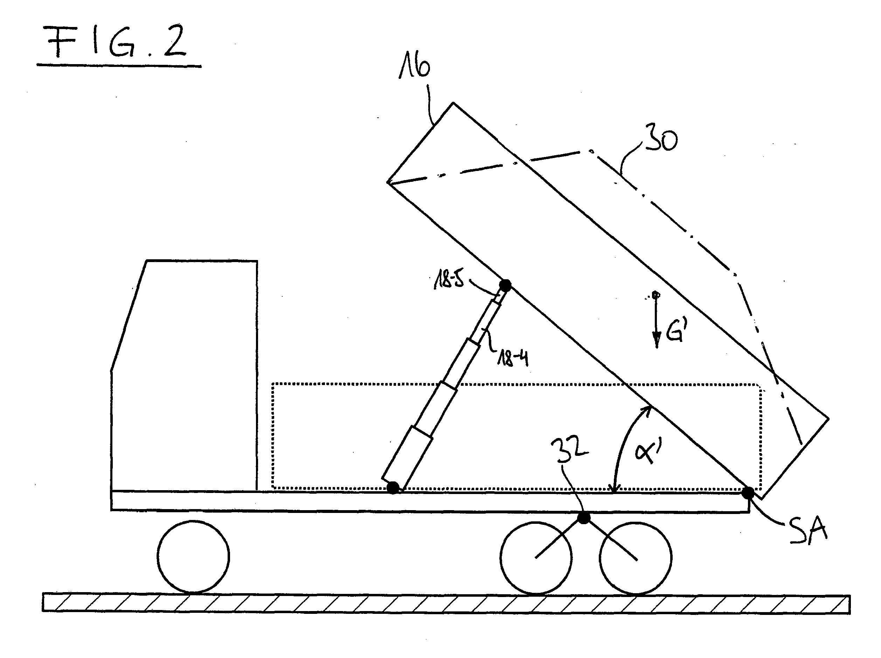

Fig. 2 zeigt das Kipperfahrzeug 10 der Fig. 1 mit weiter ausgefahrenem Teleskopzylinder 18, so dass noch die Zylinderstufen 18-4 und 18-5 sichtbar sind. Die Kippbrücke 16 ist um den Winkel α' um die Schwenkachse SA verschwenkt. Das in der Kippmulde 16 aufgenommene Ladegut 30 ist trotz des größeren Schwenkwinkels α' verglichen mit dem Kippwinkel α der Fig. 1 nur wenig verrutscht innerhalb der Kippbrücke 16. Somit hat sich auch der durch den Pfeil G' repräsentierte Schwerpunkt und die dort wirkende Gewichtskraft nicht wesentlich verlagert, bezogen auf die Relativlage zur Kippbrücke 16. Allerdings liegt der Kraftangriffspunkt der Kraft G' nunmehr hinter einer schematisch dargestellten Achsaufhängung 32 der Hinterräder 28, so dass die Gefahr bestehen kann, dass das Kipperfahrzeug 10 um diesen Aufhängungspunkt 32 oder ggf. eine Hinterachse des hinteren Hinterrades 28 kippen könnte. Eine in Fig. 2 dargestellte Situation kann beispielsweise bei stark anhaftendem Schüttgut, wie etwa lehmhaltiger Erde oder dgl. auftreten. Denkbar ist es auch, dass eine derartige Situation auftreten kann bei auf einer Kippbrücke aufgenommenen Steinstücken, die sich in irgendeiner Weise verkantet haben und nicht ins Rutschen kommen auf der geneigten Ebene der Kippbrücke 16. Ferner muss in einer solchen Situation, in der das Ladegut nicht von der Kippbrücke 16 abrutscht, ein erhöhter Druck im Teleskopzylinder 18 herrschen, um die Last anzuheben.

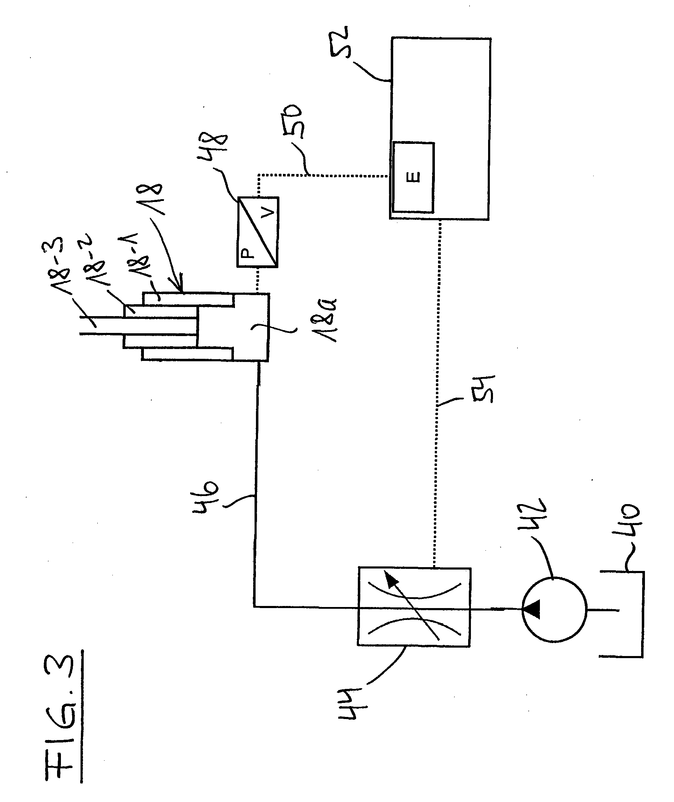

Fig. 3 zeigt ein schematisches Schaltbild für eine mögliche Ansteuerung des Teleskopzylinders 18. Aus einem Vorratsbehälter 40 wird mittels einer Pumpe 42 Hydraulikfluid, insbesondere Hydrauliköl gefördert. Das geförderte Hydraulikfluid wird durch ein Ventil 44 und eine Hydraulikleitung 46 dem Teleskopzylinder 18 zugeführt. In der Zylinderkammer 18a des Teleskopzylinders 18 wird Hydraulikdruck aufgebaut, so dass die verschiedenen Zylinderstufen 18-1 bis 18-3 ausgefahren werden können. Der in der Zylinderkammer 18a wirkende Hydraulikdruck wird durch einen Sensor 48 erfasst. Dieser Sensor 48 ist vorzugsweise ein Druck-Spannungs-Wandler (P-/V-Wandler). Der in der Zylinderkammer 18a erfasste Hydraulikdruck P wird durch den Sensor 48 in ein zum Druck P in der Regel proportionales elektrisches Spannungssignal V umgewandelt. Dieses Spannungssignal wird über eine elektrische Verbindung 50 einer Steuereinheit 52 übergeben mit einer Erfassungseinrichtung E. Die Steuereinheit 52 ist ferner derart eingerichtet, dass sie eine elektrische Verbindung 54 zum Ventil 44 umfasst, um eine Drosselöffnung des Ventils 44 ansteuern zu können.

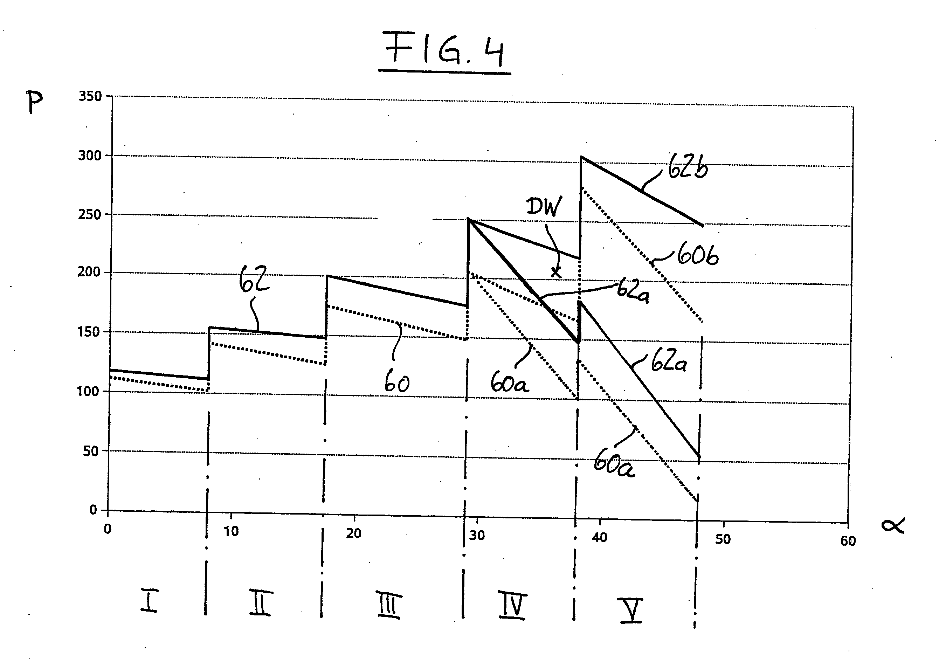

Fig. 4 zeigt ein Diagramm, bei welchem auf der X-Achse der Kippwinkel α aufgezeichnet ist und auf der Y-Achse der im Teleskopzylinder herrschende Hydraulikdruck P. Es sind zwei Kurven dargestellt, nämlich eine punktierte Kurve 60 und eine durchgezogene Kurve 62. Die punktierte Kurve 60 stellt die Druckverhältnisse bei einem Teleskopzylinder dar, wenn das Kipperfahrzeug im Wesentlichen auf einem horizontalen Untergrund steht. Die Kurve 62 zeigt die Druckverhältnisse in Abhängigkeit vom Kippwinkel an für ein Kipperfahrzeug, das auf einer 10° geneigten Untergrundsfläche steht, wobei die Hinterachse des Kipperfahrzeugs weiter oben angeordnet ist als die Vorderachse. Aus dem Diagramm ist ersichtlich, dass sich der Hydraulikdruck bei jeder neuen Druckstufe (1 - V) sprunghaft erhöht. Dieser Sprung beim Hydraulikdruck kommt daher, dass jede weiter auszufahrende Teleskopstufe eine kleinere mit Druck zu beaufschlagende Fläche aufweist, so dass zum Anheben einer gleich bleibenden Last bei kleiner werdender, mit Druck beaufschlagter Fläche entsprechend der Hydraulikdruck größer wird. Wie aus der Kurve 60 und der Kurve 62 ersichtlich, können Kippwinkelbereiche den einzelnen Teleskopstufen zugeordnet werden in Abhängigkeit vom gemessenen Hydraulikdruck. So bewegt sich beispielsweise für die Kurve 60 der Hydraulikdruck für die zweite Teleskopstufe zwischen etwa 140 bar zu Beginn und 125 bar am Ende des entsprechenden Kippwinkelbereichs, der etwa 8 - 17° umfasst. Analoges kann für die Kurve 62 festgestellt werden. Je nachdem, wie hoch der gemessene Hydraulikdruck ist, kann also ein Rückschluss auf den derzeitigen Kippwinkelbereich oder ggf. auch auf den Kippwinkel gezogen werden. Der Kippwinkelbereich, in welchem sich die Kippbrücke befindet, kann also in Abhängigkeit bzw. auf Grundlage des gemessenen Hydraulikdrucks im Teleskopzylinder bestimmt werden. Dabei sind in der Regel die Druckwerte pro Kippwinkelbereich eindeutig, insbesondere für die Kurve 62. Um ggf. innerhalb verschiedener Kippwinkelbereiche gleiche Druckwerte unterscheiden zu können, kann die in Fig. 3 dargestellte Steuereinheit 52 ggf. auch das Durchlaufen der zwischen den Teleskopzylinderstufen I - V auftretenden Druckstufen mitzählen, so dass bei Auftreten eines bestimmten Druckwerts und Berücksichtigung der mitgezählten Druckstufe entschieden werden kann, in welchem Kippwinkelbereich sich die Kippbrücke befindet.

Für die Druckkurven 60 und 62 sind ab der Druckstufe IV jeweils zwei Kurvenverläufe 60a, 62a bzw. 60b, 62b dargestellt. Dabei zeigen die Druckkurvenverläufe 60a, 62a den Normalfall mit in diesem Kippwinkelbereich normalerweise abrutschender Last, so dass der im Teleskopzylinder herrschende Druck relativ stark abnimmt. Es ist allerdings auch bei den Kurven 60a, 62a ersichtlich, dass zwischen den Druckstufen IV und V noch ein charakteristischer Drucksprung erfolgt, der den Übergang von der Druckstufe IV zur Druckstufe V anzeigt.

Die Kurvenabschnitte 60b, 62b zeigen einen eher theoretischen Verlauf der Druckkurven für den Fall, dass eine aufgenommene Last nicht von der Kippbrücke abrutscht. Diese Fälle dienen insbesondere der Auslegung des Teleskopzylinders auf theoretisch mögliche maximale Belastungen.

Unter der Annahme, dass sich eine auf der Kippbrücke aufgenommene Last nicht ordnungsgemäß von dieser entfernen lässt, können die im Teleskopzylinder gemessenen Druckwerte oberhalb der bekannten Kurvenverläufe gemäß Fig. 4 liegen. Rein beispielhaft ist dies durch einen Druckwert DW in Fig. 4 dargestellt. Dieser Druckwert für die vierte Teleskopstufe IV überschreitet sowohl die Kurve 60a als auch die Kurve 62a und stellt somit bei Vergleich dieses Druckwerts DW mit Druckwerten dieser Kurven einen Hinweis darauf dar, dass sich das Ladegut nicht ordnungsgemäß von der Kippbrücke löst, sondern an dieser anhaftet bzw. sich verkantet hat. In einem solchen Falle kann die Steuereinheit 52 der Fig. 3 beispielsweise ein akustisches oder/und optisches Signal an eine Bedienperson ausgeben und auf den ggf. unzulässigen Betriebszustand hinweisen. Alternativ oder zusätzlich ist es möglich, dass die Steuereinheit in einem solchen Falle die Hubbewegung des Teleskopzylinders 18 stoppt, damit die Bedienperson den Zustand der Ladung auf der Kippbrücke 16 überprüfen kann. Ferner ist es auch denkbar, dass die Steuereinheit 52 das Ventil 44 und ggf. die Pumpe 42 so ansteuert, dass der Druck im Teleskopzylinder kurzzeitig erhöht und rasch wieder abgesenkt wird, um eine Schüttelbewegung der Kippbrücke hervorzurufen, wodurch ggf. anhaftendes Ladegut bzw. verkantetes Ladegut gelöst werden kann. Wenn der als unzulässig erachtete Druckwert DW wieder unterhalb einer in der Steuereinheit 52 vorzugsweise gespeicherten Sollkurve 60a oder 62a (Druckkennwerte) liegt, kann das Anheben der Kippbrücke unter normalen Bedingungen weiter erfolgen.

Es ist mit der vorgestellten Hydraulikanordnung und dem beschriebenen Verfahren also möglich, den Kippwinkel bzw. Kippwinkelbereich, in dem sich eine Kippbrücke aktuell befindet, alleine aufgrund des im Teleskopzylinder herrschenden Drucks bestimmen zu können. Ferner kann der im Teleskopzylinder erfasste Druck mit Referenzwerten, insbesondere den Werten der Kurven 60, 60a, 60b oder/und 62, 62a, 62b verglichen werden, um festzustellen, ob ein für den Betrieb zulässiger oder unzulässiger Druckwert vorliegt bezogen auf den aktuellen Kippwinkelbereich. Es kann also in einfacher Weise sowohl der Kippwinkelbereich als auch der Belastungszustand überprüft werden und es können geeignete Maßnahmen eingeleitet werden, um die Standfestigkeit des Kipperfahrzeugs zu gewährleisten bzw. die Abgabe von Ladegut zu verbessern. Dies ist insbesondere in Situationen, wie der in Fig. 2 dargestellten wichtig, in denen sich der Schwerpunkt von Ladebrücke und Ladegut ungünstig verlagert bezogen auf die hinteren Auflagepunkte des Kipperfahrzeugs auf dem Untergrund und in denen sich eine ggf. übermäßige Druckbelastung im Teleskopzylinder ergibt.

## Patentansprüche

1. Verfahren zur Überwachung des Kippzustandes einer an einem Kipperaufbau (14) eines Kipperfahrzeugs (10) angeordneten Kippmulde (16), die in wenigstens eine Richtung bezogen auf den Kipperaufbau (14) schwenkbar am Kipperaufbau gelagert ist, und mit wenigstens einem die Kippmulde (16) in unterschiedliche Kippzustände bewegenden hydraulischen Teleskopzylinder (18), wobei das Verfahren die Schritte umfasst:
Erhöhen des Hydraulikdrucks (P) in dem wenigstens einen Teleskopzylinder (18), um die Kippmulde (16) von einer Fahrbereitschaftsstellung in eine zum Ausschütten von Ladegut verschwenkte Kippstellung zu bewegen,
Erfassen des im Teleskopzylinder (18) wirksamen Drucks (P) und Bestimmen des aktuellen Kippwinkelbereichs (α, α') oder des aktuellen Kippwinkels, **dadurch gekennzeichnet, dass** das Bestimmen des aktuellen Kippwinkelbereichs (α, α') oder des aktuellen Kippwinkels auf Grundlage des im Teleskopzylinder herrschenden Drucks (P) erfolgt.

2. Verfahren nach Anspruch 1, ferner umfassend den Schritt:
Vergleichen des erfassten Drucks (P) im Teleskopzylinder (18) mit Druckkennwerten wenigstens einer vorbestimmten Druckkennlinie (60, 62).

3. Verfahren nach Anspruch 2, ferner umfassend das Beeinflussen des Hydraulikdrucks (P) in Abhängigkeit des Ergebnisses des Vergleichs.

4. Verfahren nach Anspruch 3, wobei ein weiteres Verschwenken der Kippmulde (16) in eine Kippstellung mit größerem Kippwinkel verhindert wird, wenn der Vergleich ergibt, dass der erfasste Druck (P) einen für den bestimmten Kippwinkelbereich (α, α') oder Kippwinkel unzulässigen Wert (DW) aufweist, insbesondere größer ist als wenigstens ein Druckkennwert der für den Kippwinkelbereich oder Kippwinkel maßgeblichen Druckkennlinie (60, 62).

5. Verfahren nach einem der Ansprüche 1 bis 4, ferner umfassend den Schritt: wiederholtes Anheben und Absenken der Kippmulde (16) derart, dass die Kippmulde einer Schüttelbewegung unterliegt.

6. Verfahren nach Anspruch 4 und 5, wobei die Schüttelbewegung insbesondere automatisiert durchgeführt wird, wenn der erfasste Druck (P) den für den bestimmten Kippwinkelbereich (α, α') oder Kippwinkel unzulässigen Wert (DW) aufweist.

7. Verfahren nach Anspruch 6, wobei die Schüttelbewegung beendet wird, wenn der erfasste Druck (P) einen für den bestimmten Kippwinkelbereich (α, α') oder Kippwinkel zulässigen Wert aufweist, und wobei anschließend ein weiteres Anheben der Kippmulde (16) ermöglicht wird.

8. Kipperaufbau für ein Kipperfahrzeug mit einer am Kipperaufbau (14) gelagerten Kippmulde (16), die mittels wenigstens eines hydraulischen Teleskopzylinders (18) in wenigstens eine Richtung bezogen auf den Kipperaufbau (14) verschwenkbar ist, umfassend eine Hydraulikpumpe (42) zur Versorgung des Teleskopzylinders (18) mit Hydraulikfluid, einen dem wenigstens einen Teleskopzylinder (18) zugeordneten Druckerfassungsensor (48) und wenigstens eine elektronische Steuereinheit (52), **dadurch gekennzeichnet, dass** die elektronische Steuereinheit (52) dafür eingerichtet ist, das Verfahren nach einem der vorhergehenden Ansprüche durchzuführen.

9. Kipperaufbau nach Anspruch 8, wobei der Drucksensor (48) als Druck-Spannungs-Wandler ausgeführt ist, der an die Steuereinheit (52) eine sich mit dem im Teleskopzylinder (18) herrschenden Hydraulikdruck (18) verändernde elektrische Spannung (V) abgibt.

10. Kipperaufbau nach Anspruch 8 oder 9, wobei die Steuereinheit (52) derart eingerichtet ist, dass durch sie Druckkennwerte wenigstens einer vorbestimmten Druckkennlinie (60, 62) speicherbar oder gespeichert sind, vorzugsweise in Form von zur wenigstens einen Druckkennlinie zugehörigen Spannungskennwerten.

11. Kipperaufbau nach einem der Ansprüche 8 bis 10, wobei die Steuereinheit (52) derart eingerichtet ist, dass, wenn der erfasste Druck (P) einen unzulässigen Wert (DW) annimmt, durch sie eine für eine Bedienperson wahrnehmbare Ausgabe erzeugt wird oder dass durch sie ein weiteres Anheben der Kippmulde (16) automatisch verhindert wird.

12. Kipperaufbau nach Anspruch 11, wobei die Steuereinheit (52) derart eingerichtet ist, dass durch manuelle Betätigung oder automatisch durch sie ein wiederholtes Anheben und Absenken der Kippmulde (16) ansteuerbar ist, derart, dass die Kippmulde einer Schüttelbewegung unterliegt.

13. Kipperaufbau nach Anspruch 11, wobei die Steuereinheit (52) mit einem im Hydraulikkreis zwischen Pumpe (42) und Teleskopzylinder (18) angeordneten Ventil (44), vorzugsweise elektrisch vorgesteuerten Ventil verbunden ist, derart, dass durch die Steuereinheit (52) das Ventil (44) verstellbar ist.

14. Kipperfahrzeug, insbesondere Hinterseitenkipper (10) oder Zweiseitenkipper oder Dreiseitenkipper, mit einem Fahrzeugrahmen (14), an dem ein Kipperaufbau nach einem der Ansprüche 8 bis 13 angebracht ist.

## Claims

1. Method for monitoring the tipping state of a tipping body (16) which is arranged on a tipper assembly (14) of a tipper vehicle (10) and is mounted on the tipper assembly so as to be pivotable in at least one direction in relation to the tipper assembly (14), and comprising at least one hydraulic telescopic cylinder (18) which moves the tipping body (16) into different tipping states, the method comprising the steps of:
increasing the hydraulic pressure (P) in the at least one telescopic cylinder (18) in order to move the tipping body (16) from a travel-ready position into a pivoted tipping position in order to dump a load,
detecting the pressure (P) acting in the telescopic cylinder (18) and determining the current tipping angle range (α, α') or the current tipping angle, **characterised in that** the current tipping angle range (α, α') or the current tipping angle is determined on the basis of the pressure (P) prevailing in the telescopic cylinder.

2. Method according to claim 1, further comprising the step of:
comparing the detected pressure (P) in the telescopic cylinder (18) with pressure characteristics of at least one predetermined pressure characteristic curve (60, 62).

3. Method according to claim 2, further comprising influencing the hydraulic pressure (P) depending on the result of the comparison.

4. Method according to claim 3, wherein further pivoting of the tipping body (16) into a tipping position having a greater tipping angle is prevented when the comparison shows that the detected pressure (P) has a prohibited value (DW) for the particular tipping angle range (α, α') or tipping angle, in particular is greater than at least one pressure characteristic of the pressure characteristic curve (60, 62) which is relevant for the tipping angle range or tipping angle.

5. Method according to any of claims 1 to 4, further comprising the step of:
repeatedly raising and lowering the tipping body (16) such that the tipping body is subjected to a shaking movement.

6. Method according to either claim 4 or claim 5, wherein the shaking movement is carried out in particular in an automated manner when the detected pressure (P) has a prohibited value (DW) for the particular tipping angle range (α, α') or tipping angle.

7. Method according to claim 6, wherein the shaking movement is terminated when the detected pressure (P) has an allowable value for the particular tipping angle range (α, α') or tipping angle, and wherein further raising of the tipping body (16) is then made possible.

8. Tipper assembly for a tipper vehicle having a tipping body (16) which is mounted on the tipper assembly (14) and is pivotable in at least one direction in relation to the tipper assembly (14) by means of at least one hydraulic telescopic cylinder (18), comprising a hydraulic pump (42) for supplying the telescopic cylinder (18) with hydraulic fluid, a pressure detection sensor (48) assigned to the at least one telescopic cylinder (18), and at least one electronic control unit (52), **characterised in that** the electronic control unit (52) is designed to implement the method according to any of the preceding claims.

9. Tipper assembly according to claim 8, wherein the pressure sensor (48) is designed as a pressure potential transformer which outputs a voltage (V) to the control unit (52), which voltage varies with the hydraulic pressure (18) prevailing in the telescopic cylinder (18).

10. Tipper assembly according to either claim 8 or claim 9, wherein the control unit (52) is designed such that pressure characteristics of at least one predetermined pressure characteristic curve (60, 62) can be stored or are stored thereby, preferably in the form of voltage characteristics associated with the at least one pressure characteristic.

11. Tipper assembly according to any of claims 8 to 10, wherein the control unit (52) is designed such that, when the detected pressure (P) takes on a prohibited value (DW), an output that can be viewed by an operator is generated by said control unit, or that further raising of the tipping body (16) is automatically prevented by said control unit.

12. Tipper assembly according to claim 11, wherein the control unit (52) is designed such that repeated raising and lowering of the tipping body (16) can be controlled by manual actuation or automatically by said control unit, in such a way that the tipping body is subjected to a shaking movement.

13. Tipper assembly according to claim 11, wherein the control unit (52) is connected to a valve (44), preferably an electrically pilot-operated valve, which is arranged between the pump (42) and the telescopic cylinder (18) in the hydraulic circuit, such that the valve (44) is adjustable by the control unit (52).

14. Tipper vehicle, in particular a rear side tipper (10) or two-way tipper or three-way tipper, comprising a vehicle frame (14), to which a tipper assembly according to any of claims 8 to 13 is attached.

## Revendications

1. Procédé pour la surveillance de l'état de basculement d'une benne basculante (16) disposée sur une structure de basculement (14) d'un véhicule à benne basculante (10), qui est montée sur la structure de basculement de façon basculante dans au moins une direction par rapport à la structure de basculement (14), et avec au moins un vérin télescopique hydraulique (18) déplaçant la benne basculante (16) dans différents états de basculement, le procédé comprenant les étapes suivantes:
augmenter la pression hydraulique (P) dans ledit au moins un vérin télescopique (18), afin de déplacer la benne basculante (16) d'une position apte au roulage à une position de basculement inclinée pour le déversement d'une charge,
détecter la pression (P) active dans le vérin télescopique (18) et déterminer la plage d'angle de basculement actuelle (α, α') ou l'angle de basculement actuel,
**caractérisé en ce que** l'on effectue la détermination de la plage d'angle de.basculement actuelle (α, α') ou de l'angle de basculement actuel sur la base de la pression (P) régnant dans le vérin télescopique.

2. Procédé selon la revendication 1, comprenant en outre l'étape suivante:
comparer la pression détectée (P) dans le vérin télescopique (18) avec des valeurs caractéristiques de pression d'au moins une courbe caractéristique de pression prédéterminée (60, 62).

3. Procédé selon la revendication 2, comprenant en outre l'étape suivante:
influencer la pression hydraulique (P) en fonction du résultat de la comparaison.

4. Procédé selon la revendication 3, dans lequel on empêche un basculement supplémentaire de la benne basculante (16) dans une position de basculement avec un plus grand angle de basculement, lorsque la comparaison révèle que la pression détectée (P) présente une valeur (DW) inadmissible pour la plage d'angle de basculement (α, α') déterminée ou pour l'angle de basculement déterminé, en particulier est plus élevée d'au moins une valeur de pression de la courbe caractéristique de pression (60, 62) déterminante pour la plage d'angle de basculement ou pour l'angle de basculement.

5. Procédé selon l'une quelconque des revendications 1 à 4, comprenant en outre l'étape suivante:
monter et descendre de façon répétée la benne basculante (16), d'une manière telle que la benne basculante subisse un mouvement saccadé.

6. Procédé selon la revendication 4 et 5, dans lequel on exécute le mouvement saccadé en particulier automatiquement, lorsque la pression détectée (P) présente la valeur (DW) inadmissible pour la plage d'angle de basculement déterminée (α, α') ou pour l'angle de basculement déterminé.

7. Procédé selon la revendication 6, dans lequel on met fin au mouvement saccadé, lorsque la pression détectée (P) présente une valeur admissible pour la plage d'angle de basculement déterminée (α, α') ou pour l'angle de basculement déterminé, et dans lequel une nouvelle montée de la benne basculante (16) est ensuite permise.

8. Structure de basculement pour un véhicule à benne basculante avec une benne basculante (16) montée sur la structure de basculement (14), qui peut pivoter au moyen d'au moins un vérin télescopique hydraulique (18) dans au moins une direction par rapport à la structure de basculement (14), comprenant une pompe hydraulique (42) pour l'alimentation du vérin télescopique (18) en fluide hydraulique, un détecteur de pression (48) associé audit au moins un vérin télescopique (18) et au moins une unité de commande électronique (52), **caractérisée en ce que** l'unité de commande électronique (52) est conçue de façon à exécuter le procédé selon l'une quelconque des revendications précédentes.

9. Structure de basculement selon la revendication 8, dans laquelle le détecteur de pression (48) est réalisé sous la forme d'un convertisseur pression-tension, qui envoie à l'unité de commande (52) une tension électrique (V) variant avec la pression hydraulique (18) régnant dans le vérin télescopique (18).

10. Structure de basculement selon la revendication 8 ou 9, dans laquelle l'unité de commande (52) est conçue de telle manière qu'elle puisse mémoriser ou qu'elle mémorise des valeurs caractéristiques de pression d'au moins une courbe caractéristique de pression prédéterminée (60, 62), de préférence sous la forme de valeurs caractéristiques de tension correspondant à ladite au moins une courbe caractéristique de pression

11. Structure de basculement selon l'une quelconque des revendications 8 à 10, dans laquelle l'unité de commande (52) est conçue de telle manière que, lorsque la pression détectée (P) atteint une valeur inadmissible (DW), elle émette un message perceptible par un opérateur ou qu'elle empêche automatiquement une montée supplémentaire de la benne basculante (16).

12. Structure de basculement selon la revendication 11, dans laquelle l'unité de commande (52) est conçue de telle manière qu'une montée et une descente répétées de la benne basculante (16) puisse être commandée par un actionnement manuel ou automatiquement par elle-même, de telle manière que la benne basculante subisse un mouvement saccadé.

13. Structure de basculement selon la revendication 11, dans laquelle l'unité de commande (52) est reliée à une soupape (44) disposée dans le circuit hydraulique entre la pompe (42) et le vérin télescopique (18), de préférence une soupape pilote électrique, de telle manière que la soupape (44) soit réglable par l'unité de commande (52).

14. Véhicule à benne basculante, en particulier à benne basculante à l'arrière (10) ou sur deux côtés ou sur trois côtés, avec un châssis de véhicule (14), sur lequel est installée une structure de basculement selon l'une quelconque des revendications 8 à 13.
